# EUROPEAN PATENT APPLICATION

(11) **EP 3 539 889 A2**
(43) Date of publication of application: **18.09.2019**
(21) Application number: 19160878.5
(22) Date of filing: 05.03.2019
(51) Int. Cl.: B65D 23/00, B65D 25/24, B65C 9/00

(54) **A METHOD FOR MANUFACTURING A CONTAINER WITH A SELF-BEARING SUPPORT**

(30) Priority: 14.03.2018 IT 201800003549
(71) Applicant: P.E.T. Engineering S.r.l., 31020 San Vendemiano, Treviso (IT)
(72) Inventor: BAREL, Moreno, I-31020 San Vendemiano, TREVISO (IT)
(74) Representative: Long, Giorgio

(57) **Abstract**

The object of the present invention is a method for manufacturing a container (C), such as a PET bottle, with a convex bottom and a self-bearing support, typically a self-bearing label.

In particular, the present invention relates to a method for manufacturing a container (C) with a convex bottom and a self-bearing support, comprising the following operational steps:
a) providing a plurality of containers (C) having a convex bottom;
b) providing a machine (100) for applying strips made of flexible material to said containers (C) and a plurality of support elements (1, 101, 201) for said containers (C), said support elements (1, 101, 201) being in the form of strips made of a support material;
c) feeding said plurality of containers (C) to said machine (100);
d) applying a support element (1, 101, 201) to each of said containers (C).

## Description

The object of the present invention is a method for manufacturing a container, such as a PET bottle, with a convex bottom and a self-bearing support, typically a self-bearing label.

Reference later in the description is mainly made, for convenience of disclosure, to bottles made of polymeric material, such as for example PET (polyethylene terephthalate), it however being understood that the principles of the present invention may also be applied to other types of containers.

A beverage bottle generally comprises a mouth, a neck, a shoulder, a body and a bottom.

Neck means the narrowest portion of the bottle. The cap intended to close the mouth of the bottle usually is screwed or fastened at the neck.

Body means usually the most extended portion of the bottle which may substantially have constant cross section, or variable cross section in other embodiments, having for example, circular or square shape.

Shoulder means the tapered portion of the bottle, suitable for joining the neck to the body.

Bottom means the portion arranged at the opposite end with respect to the mouth, which serves the resting function for the bottle by ensuring it keeps a vertical position when it is resting on a plane.

As known, the bottom of bottles may substantially be manufactured in two manners, by manufacturing a convex, typically hemispheric, bottom and applying a separate base of polymeric material, or by creating a particular geometry of the bottom of the bottle which allows a resting surface for the bottle to be obtained.

With regards to bottles with a separate base, the base may be manufactured for example, by means of injection-molding thermoplastic material, such as polycarbonate or ABS (acrylonitrile butadiene styrene) or the like. These bottles may be considered composite bottles formed by a bottle element, consisting of a neck, shoulder, bottle body and a bottom, and by a separate base serving the function of support of the bottle element during use. The base is intended to be fastened to the bottom of the bottle body by means of for example, gluing, snap-fit fastening means, by means of screwing, and similar known means.

Such a type of base comprises a middle concave portion with concavity facing upwards, i.e. facing the adjacent bottom of the bottle, which is suitable for housing the bottom of the bottle, from which an edge intended to rest on the resting plane and ensure the bottle element is kept in vertical position regardless of the shape of the bottom, perimetrally extends downwards.

If the bottle is provided with a separate base, the bottom of the bottle may be manufactured with any shape, in particular with hemispheric or rounded shape, in order to increase the structural resistance thereof without the need to prepare possible reinforcing ribs. Such a solution is for example described in EP0612667.

The solution with separate base was widely used in the past and is still used for receptacles that are to contain a high pressure liquid because it allows improved mechanical properties to be obtained with respect to the more common bottle with petaloid bottom.

However, the fact that this type of bottle requires assembling the filled and labeled bottle with the support base results in an increase of the costs and increased operating complications.

The formation of the support base, which occurs separately by molding, also results in a significant increase of cost, both due to the need to prepare a plant dedicated to such a production and due to the fact that the printing of the support base requires a sizeable quantity of material.

It therefore is the object of the present invention to resolve the drawbacks of the mentioned known art by making available a method for manufacturing a container with a convex bottom and a self-bearing support which is economically advantageous and simple to manufacture.

Such an object is achieved by a method for manufacturing a container with a convex bottom and a self-bearing support as outlined in claim 1, which definitions form an integral part of the present description. Preferred aspects of the invention are outlined in the dependent claims.

Therefore, an object of the invention is a method for manufacturing a container with a convex bottom and a self-bearing support, the method comprising the following operational steps:
a) providing a plurality of containers having a convex bottom;
b) providing a machine for applying strips made of flexible material to said containers and a plurality of support elements for said containers, said support elements being in the form of strips made of a support material;
c) feeding said plurality of containers to said machine;
d) applying a support element to each of said containers (C).

A further object of the invention is a container with a convex bottom and a side surface, comprising a self-bearing support element, in which:
- said support element is in the form of a strip made of a support material;
- optionally said support element comprises reinforcing elements;
- said support element is adhered to at least one portion of said side surface;
- said support element, when adhered to said side surface of the container, extends downwards at least to the level of an end of the bottom of the container;
- optionally said support element comprises images or writings so as to act as a label for the container.

The advantages and features of the present invention will become more apparent from the detailed description of certain example embodiments thereof, given hereinbelow only by way of non-limiting examples, with reference to the following drawings, in which:
Figure 1A depicts a diagrammatic view of the step of wrapping the self-bearing support on a bottle;
Figure 1B depicts a perspective view of a bottle with the self-bearing support according to the invention;
Figure 1C depicts a side transparent view of the bottle in figure 1B;
Figure 2A depicts a perspective view of a different embodiment of the self-bearing support according to the invention;
Figure 2B depicts a perspective view of another embodiment of the self-bearing support according to the invention;
Figure 2C depicts a perspective view of a bottle with the self-bearing support in figure 2B;
Figure 2D depicts a side transparent view of the bottle in figure 2C;
Figure 3A depicts a perspective view of a reel of a strip for the self-bearing support according to one embodiment the invention;
Figure 3B depicts a perspective view of a bottle with the support in figure 3A;
Figure 4A depicts a diagrammatic top view of a first embodiment of a machine for manufacturing a container with self-bearing support according to the invention;
Figure 4B depicts a simplified perspective view of the step of applying the self-bearing support with the machine in figure 4A;
Figure 4C depicts a simplified perspective view of a detail of a machine for manufacturing a container with a self-bearing support according to the invention;
Figure 5 depicts a diagrammatic top view of a variant of the machine in figure 4A;
Figure 6A depicts a diagrammatic top view of a second embodiment of a machine for manufacturing a container with a self-bearing support according to the invention;
Figure 6B depicts a simplified perspective view of the step of applying the self-bearing support with the machine in figure 6A;
Figure 7 depicts a diagrammatic top view of a variant of the machine in figure 6A;
Figure 8 depicts a simplified perspective view of a detail of the machines in figures from 4A to 7 according to a preferred embodiment;
Figure 9 depicts a simplified perspective view of a detail of a machine for manufacturing containers according to figures 2A to 2D;
Figure 10 depicts a simplified perspective view of a detail of a machine for manufacturing containers according to figures 2A to 2D according to a different embodiment.

The method of the present invention comprises the following operational steps:
a) providing a plurality of containers C with a convex bottom;
b) providing a machine for applying strips made of flexible material to said containers C and a plurality of support elements 1 for said containers, said support elements 1 being in the form of strips made of a support material;
c) feeding said plurality of containers C to said machine;
d) applying a support element 1 to each of said containers C.

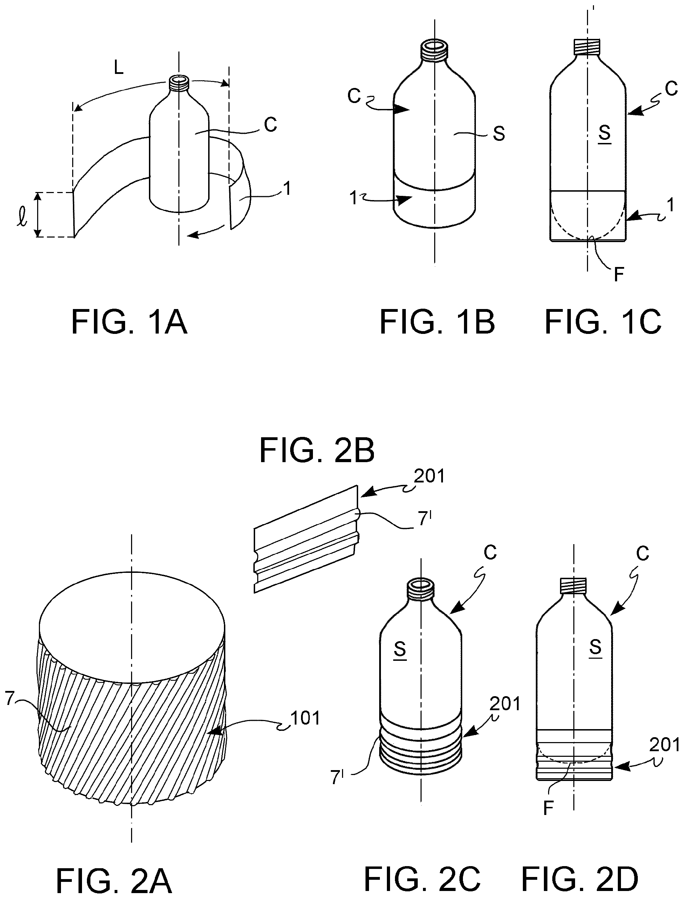

Drawings 1A, 1B and 1C diagrammatically show the step of applying the support element 1 (fig. 1A) and container C with the support element 1 applied.

The containers C with convex bottom preferably are bottles, e.g. PET bottles. The term "convex bottom" means a convexity facing outwards, that is downwards. Preferably, the convex bottom is a hemispheric bottom. An example of such bottles is the one described in International Application no. PCT/IB2017/052798 to the same Applicant.

The machine for applying strips made of flexible material usable for the objects of the present invention may be a labeler suitable for handling containers with a convex bottom which therefore do not remain in upright position when set down.

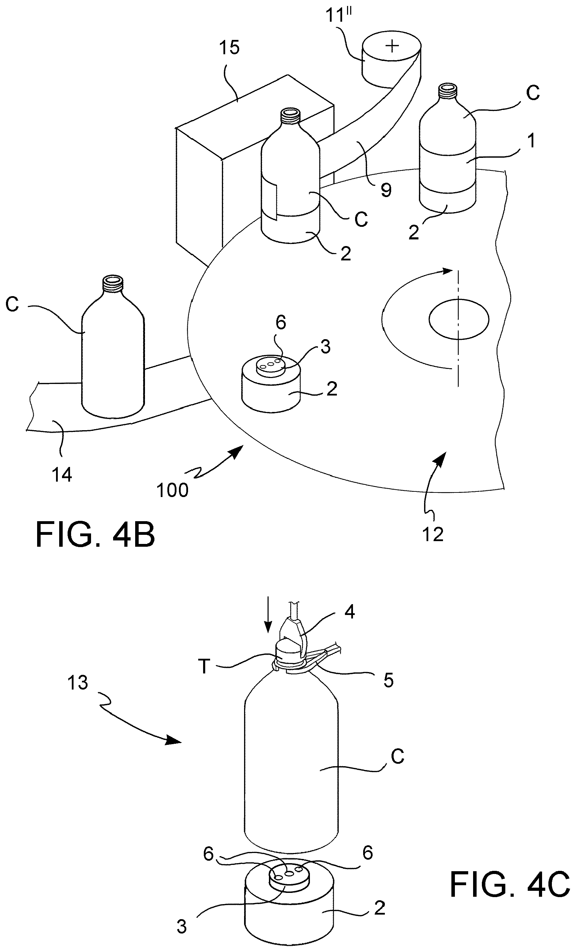

A peculiarity of a machine for applying strips made of flexible material of this type is shown in figure 4C, in which numeral 2 indicates a support plate comprising a lower retaining element 3 and an upper retaining element 4. Container C is released onto plate 2 by a distribution star (not shown) and the upper retaining element 4 is lowered onto the cap T of container C so as to keep container C pressed against the lower retaining element 3. Gripper 5 shown in the drawing is a further or alternative means of retaining the upper retaining element 4 by acting at the neck of container C.

The lower retaining element 3 may have centering protrusions 6 arranged for example, in a triangle, or a concave surface (not shown) so as to house the end portion of the convex bottom of container C.

The support material may be a plastic material, such as PET (polyethylene terephthalate), PP (polypropylene), OPP (oriented polypropylene), PVC (polyvinylchloride), etc., a paper material, a metal material, such as aluminum, aluminum alloys, iron alloys, or a polylaminate material, that is a multilayer material formed by layers of materials chosen from plastic, paper and metal.

As mentioned, the support element 1 is in the form of a strip of said support material. The term "strip made of support material" means a portion of film of support material i) of such a rigidity as to support container C filled with the packing product in an upright position, ii) of such a flexibility as to be wrapped about the side surface S of the container, in particular by means of a machine for applying strips made of flexible material to said containers C, iii) of such a length "L" as to at least partially wrap the circumference of the side surface S of container C, and iv) of such a width "l" as to adhere to a portion of side surface S of container C and finish at the level of, or below the bottom F of container C.

The rigidity and the flexibility of the strip of support element depend on the support material used and the thickness thereof, which varies according to the support material.

An ideal balancing between rigidity and flexibility of the strip of the support element 1 may be obtained with the following thicknesses:
- if the support material is a plastic material, from 0.03 to 2.0 mm;
- if the support material is a paper material, from 0.1 to 4 mm;
- if the support material is a metal material, from 0.015 to 0.5 mm;
- if the support material is a polylaminate material, from 0.1 to 4 mm.

Significantly greater thicknesses are used in the present case if compared with the thicknesses of a normal label (about 18 to 20 microns for plastic material, up to 100 microns for paper material).

In certain embodiments, the support element may comprise reinforcing elements 7, 7' such as corrugations 7 (support element 101 in figure 2A) or ripples 7' (support element 201 in figures 2B to 2D). Thereby, smaller thicknesses may be used, generally towards the lower limit of the ranges indicated above.

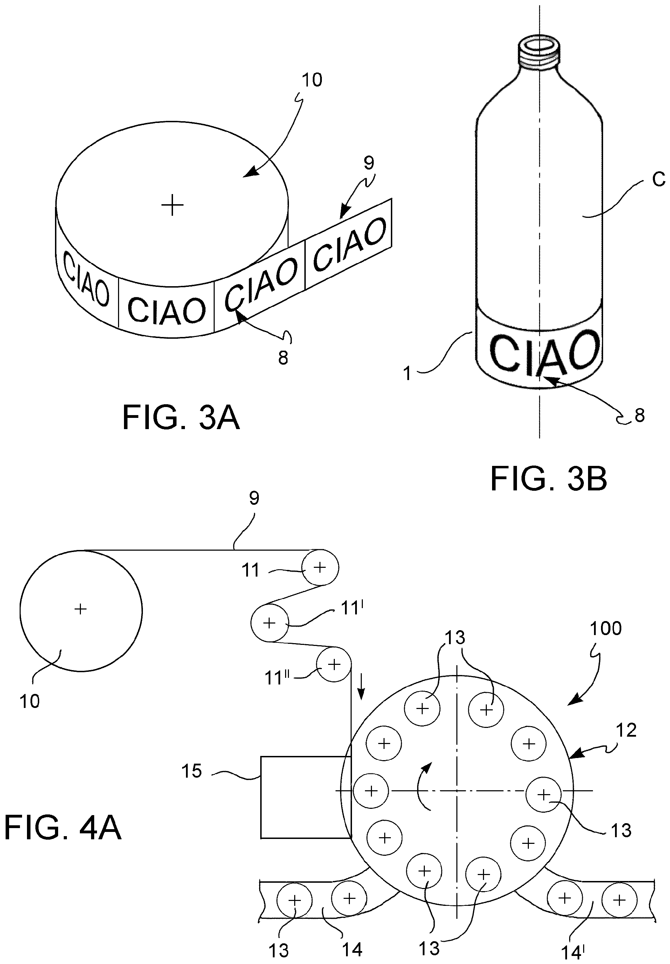

In preferred embodiments, the support element 1 also acts as label for container C, as shown in figure 3B. In this case, the face of the support element 1 comprises images or writings 8.

The method of the invention may be carried out using various technologies and various labeling systems and machines, as described below.

In general, such technologies belong to two separate categories:
- the one that uses a reel of film from which the labels are singularized in line, in the case there are support elements 1, 101, 201 of support material, and
- the one that uses labels already cut and die-cut to form packs of labels/support elements 1, 101, 201, in the case there are strips of support material.

Figure 3A shows by way of example, a reel 10 on which there is wrapped a strip 9 of support material on which images or writings 8 were imprinted at regular intervals so as to later obtain the single support elements 1, 101, 201 by cutting.

The machines for carrying out the method of the invention are described herein only in general terms and by means of diagrammatic views because such labeling machines are in themselves known and therefore do not require a more detailed description.

A first machine for carrying out the method of the invention is shown in figures 4A and 4B and comprises:
1) a carousel 12 which rotationally supports a plurality of labeling units 13;
2) a device 15 for applying a support element 1, 101, 201 to a container C;
3) a system for feeding a strip 9 of support material from a reel 10 to the application device 15;
4) a device for cutting the single support elements 1, 101, 201 from strip 9, and optionally a device for applying an adhesive layer to the surface of strip 9.

With reference to figure 4C, each labeling unit 13 comprises a plate 2 comprising a lower retaining element 3. Plate 2 is rotating so as to promote the wrapping of the support element 1, 101, 201 on the side surface S of container C. The labeling unit 13 further comprises an upper retaining element 4 and/or 5 which acts on cap T and/or on the neck of container C so as to keep the latter pressed against the lower retaining element 3.

As described above, the lower retaining element 3 may have centering protrusions 6 arranged for example, in a triangle, or a concave surface (not shown) so as to house the end portion of the convex bottom of container C.

The containers C are fed to carousel 12 by means of a first transport system 14 and they are picked from the carousel by a second transport system 14' after the application of the support element 1, 101, 201. The transport systems 14, 14' in certain embodiments are made by means of conveyor belts, while they comprise a distribution star in other embodiments.

A device 15 for applying a support element 1, 101, 201 on a container C is positioned downstream of the first transport system 14, with respect to the rotation direction of carousel 12. The application device 15, which is of conventional type, receives strip 9 (from which the support elements 1, 101, 201 are singularized) from a reel 10 by means of a series of idler rollers 11, 11', 11''.

The application device 15 generally consists of a rotating drum on which surface is applied a vacuum in order to withhold strip 9 or the single support elements 1, 101, 201, and is arranged tangent with carousel 12. A device for applying an adhesive layer to the surface of strip 9 and/or a device for cutting the single support elements 1, 101, 201 from strip 9 may be positioned upstream of the application point of the support element on container C, with respect to the rotation direction of the drum.

In certain embodiments, strip 9 is pre-glued, hence the device for applying the adhesive may be omitted.

In certain embodiments, such as the one shown in figure 4B, the cutting device acts when the head flap of strip 9 is already applied on the side surface S of container C.

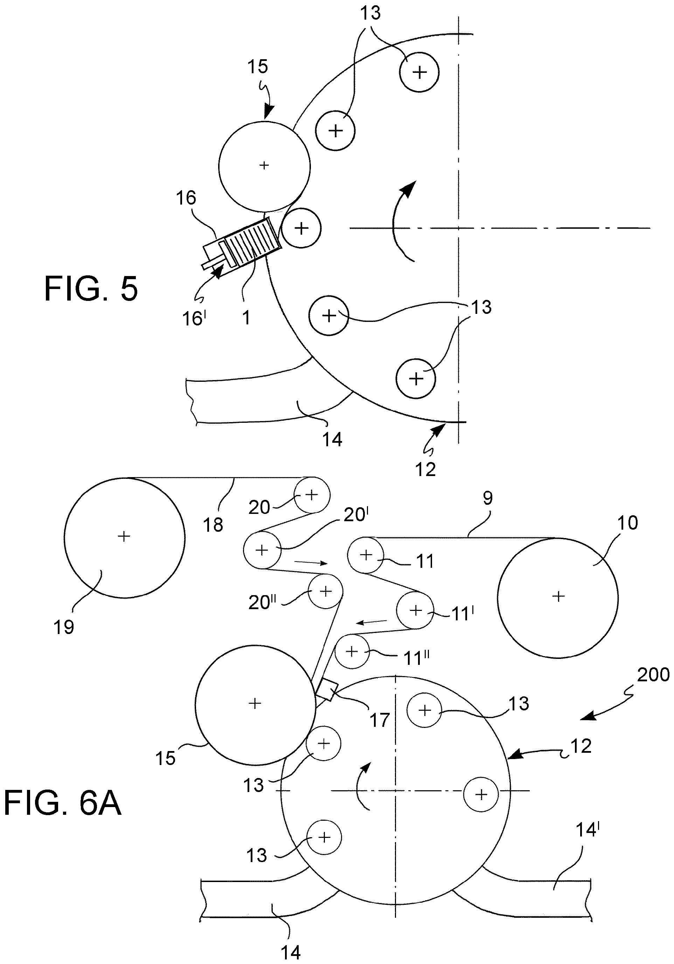

Figure 5 shows a different embodiment of machine 100, in which the support elements 1 are already singularized and die-cut and are contained in a dispenser 16 which feeds the application device 15, and therefore it does not comprise a device for cutting the support elements from a strip. Dispenser 16 may comprise a pusher 16' to keep the pack of support elements 1 pressed against the dispensing opening and therefore promote the outlet thereof.

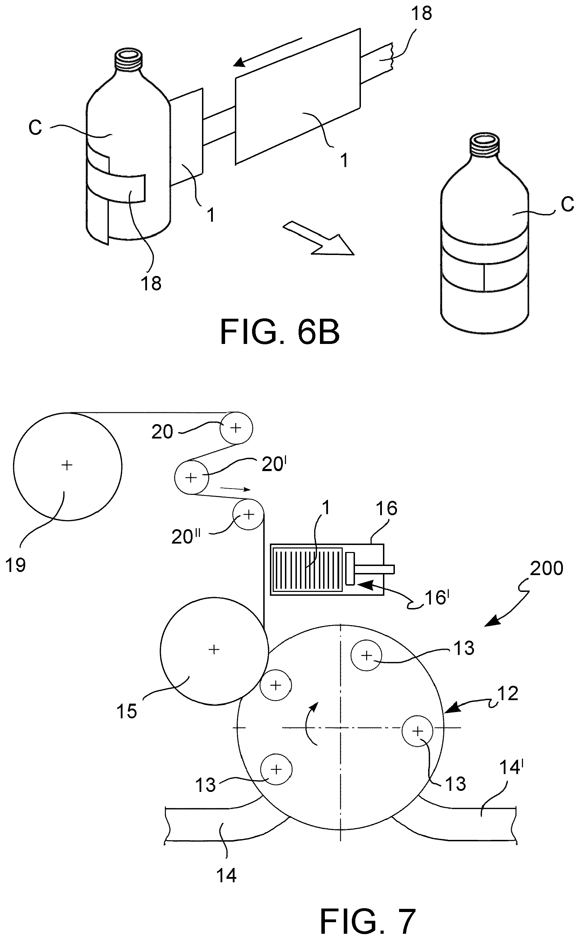

Figures 6A and 6B show a different machine 200 for carrying out the method of the invention, comprising:
1) a carousel 12 which rotationally supports a plurality of labeling units 13;
2) a device 15 for applying a support element 1, 101, 201 to a container C;
3) a system for feeding a strip 9 of support material from a reel 10 to the application device 15;
4) a device for cutting the single support elements 1, 101, 201 from strip 9;
5) a system for feeding a film 18 from a reel 19 to the application device 15, said feeding system being configured to take said film 18 to a feeding point of said support elements 1, 101, 201;
6) optionally a device for applying an adhesive layer to the surface of film 18.

Carousel 12 with the labeling units 13 and the transport systems 14, 14' are as described above.

Strip 9 from which the single support elements 1, 101, 201 are obtained is unwound from a reel 10 and is brought, through a series of idler rollers 11, 11', 11", at a cutting device 17 which singularizes the support elements 1, 101, 201. The cutting device 17 is arranged at the application device 15, as described above.

A film 18 is unwound from a second reel 19 and conducted, through a series of idler rollers 20, 20', 20", to the application device 15, as described above. Film 18 is adhesive or made adhesive by means of the application of a layer of glue by means of a specific device positioned upstream of the corresponding point of the application device 15 with the cutting device 17, with respect to the feeding direction of film 18.

The support element 1, 101, 201 is adhered to film 18 which is applied to a container C immediately downstream with respect to the feeding direction of film 18. An adequate portion of film 18 may be cut from strip 18 either upstream of the device 17 for cutting strip 9 or immediately downstream thereof.

Figure 7 shows a different embodiment of machine 200, in which the support elements 1 are already singularized and die-cut and are contained in a dispenser 16 arranged upstream of the application device 15, with respect to the feeding direction of film 18. Dispenser 16 may comprise a pusher 16' to keep the pack of support elements 1 pressed against the dispensing opening and therefore promote the grasping thereof by film 18.

As described above, in certain embodiments strip 9 and accordingly, the support elements 1, may act as labels and therefore have images or writings 8. Strip 9 or the single support elements 1, according to the technology used in the method of the invention, may be pre-printed with the images or writings 8.

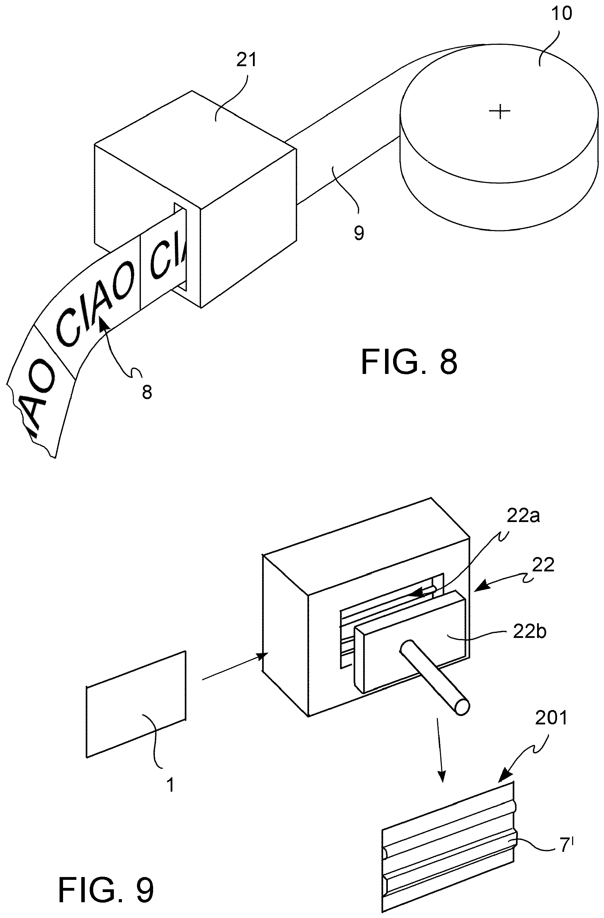

In a different embodiment shown in figure 8, machine 100, 200 may comprise an in-line printing device 21 arranged between reel 10 and the device 15 for applying the support element 1 to a container C. The in-line printing device 21 may be a common ink jet or laser printer, chosen among the ones normally used for in-line printing of strips of plastic or paper material.

In certain embodiments in which the support elements 1, 101, 201 are used as already pre-cut elements, an in-line printer may be positioned for example, at the application device 15, between the release point of the support elements 1, 101, 201 by dispenser 16 and the application point of the support elements on the containers C.

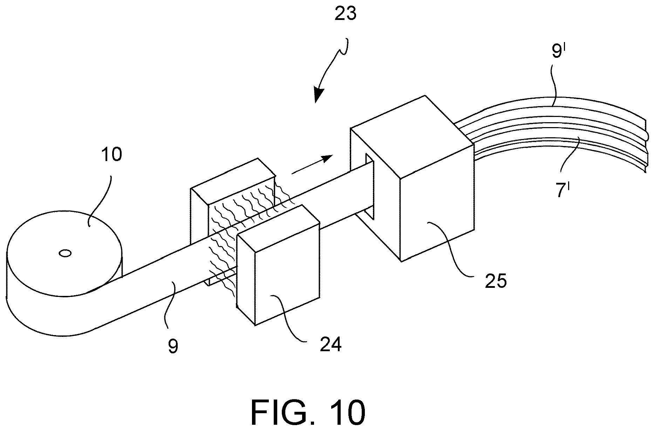

As described above in relation to figures 2A to 2D, in certain embodiments the support element 101, 201 comprises stiffening corrugations 7 or ripples 7'. Figures 9 and 10 show two different devices for making such corrugations 7 or ripples 7' on the support elements 101, 201.

Figure 9 diagrammatically shows a press device 22 comprising a mold 22a and a punch 22b, into which single support elements 1 for making a support element 201 with ripples 7' are fed. The press device 22 may be heated so as to carry out a thermal pressing, in particular usable for forming support elements 101, 201 made of plastic material. Such a device, which is diagrammatically shown in a simplified manner in the drawing, may be arranged both in line, upstream of dispenser 16, and separately so as to preform the support elements 201. The elements 101 similarly may be formed.

Figure 10 instead shows, again in diagrammatic and simplified manner, an in-line forming device 23 which, if the support material is a plastic material, comprises a heating device 24 and a pressing device 25 arranged downstream of the heating device 24, with respect to the feeding direction of strip 9. Such device, which in particularly is usable to form a strip 9 made of plastic, paper, metal or polylaminate material, provides for example preheating strip 9 up to a softening point thereof in the case of plastic material, and then causing it to pass through the pressing device 25, which for example, may comprise a pair of opposed rollers, on the surface of which corrugation 7 or ripple 7' to be made is reproduced in positive and negative manner, respectively. Thus a strip 9' of formed material is obtained, from which the single support elements 101, 201 may be singularized according to the methods described above.

The pressing device 23, which is described arranged in line in the machine of the invention, may also be used as separate device so as to preform strip 101, 201, which is then used in the method of the invention.

The method of the invention therefore achieves the preset objects because it allows a container with convex bottom in conjunction with a support base to be obtained in a single passage and with same equipment, in a simple manner and with reduced cost by also using labeling machines of commercial type. The support element may also act as label, whereby the labeling step and coupling step with a support base occurs simultaneously with a same passage.

A person skilled in the art, with the purpose of meeting specific needs, may make modifications and/or replace elements described with equivalent elements to the embodiments described above, without departing from the scope of the accompanying claims.

## Claims

1. A method for manufacturing a container (C) with a convex bottom provided with a self-bearing support, comprising the following operational steps:
a) providing a plurality of containers (C) having a convex bottom (F);
b) providing a machine (100, 200) for applying strips made of flexible material to said containers (C) and a plurality of support elements (1, 101, 201) for said containers (C), said support elements (1, 101, 201) being in the form of strips made of a support material;
c) feeding said plurality of containers (C) to said machine (100, 200);
d) applying a support element (1, 101, 201) to each of said containers (C).

2. A method according to claim 1, wherein said containers (C) have a hemispheric bottom (F).

3. A method according to claim 1 or 2, wherein the support material is chosen from a plastic material, such as polyethylene terephthalate, polypropylene, oriented polypropylene, polyvinylchloride, a paper material, a metal material, such as aluminum, aluminum alloys, iron alloys, or a polylaminate material consisting of layers of materials chosen from plastic, paper and metal.

4. A method according to any one of the claims from 1 to 3, wherein the support element (1, 101, 201) is a strip made of support material i) of such a rigidity as to support the container (C) filled with a packing product in an upright position, ii) of such a flexibility as to be wrapped about a portion of side surface (S) of the container, iii) of such a length "L" as to wrap, at least partially, the side surface (S) of the container (C), and iv) of such a width "l" as to adhere to said portion of side surface (S) of the container (C) and finish at the level of or below the bottom (F) of the container (C).

5. A method according to claim 4, wherein said strip of support element (1, 101, 201) has the following thicknesses:
- if the support material is a plastic material, from 0.03 to 2.0 mm;
- if the support material is a paper material, from 0.1 to 4 mm;
- if the support material is a metal material, from 0.015 to 0.5 mm;
- if the support material is a polylaminate material, from 0.1 to 4 mm.

6. A method according to any one of the claims from 1 to 5, wherein the support element (101, 201) comprises reinforcing elements (7, 7'), preferably corrugations (7) and/or ripples (7').

7. A method according to any one of the claims from 1 to 6, wherein the support element (1, 101, 201) also acts as a label for the container (C), one face or both faces of the support element (1, 101, 201) being able to comprise images or writings (8).

8. A method according to any one of the claims from 1 to 7, wherein said machine (100) comprises:
1) a carousel (12), which rotationally supports a plurality of labeling units (13), wherein each labeling unit (13) comprises a rotating plate (2), comprising a lower retaining element (3) and an upper retaining element (4) for the container (C);
2) a device (15) for applying a support element (1, 101, 201) to a container (C);
3) a system for feeding a strip (9) of support material from a reel (10) to the application device (15) ;
4) a device for cutting the single support elements (1, 101, 201) from the strip (9), and optionally a device for applying an adhesive layer to the surface of the strip (9).

9. A method according to any one of the claims from 1 to 7, wherein said machine (100) comprises:
1) a carousel (12), which rotationally supports a plurality of labeling units (13), wherein each labeling unit (13) comprises a rotating plate (2), comprising a lower retaining element (3) and an upper retaining element (4) for the container (C);
2) a device (15) for applying a support element (1, 101, 201) to a container (C);
3) a dispenser (16) of support elements (1, 101, 201) which are die-cut and piled in a pack;
4) optionally, a device for applying an adhesive layer to the surface of the support elements (1, 101, 201) .

10. A method according to any one of the claims from 1 to 7, wherein said machine (200) comprises:
1) a carousel (12), which rotationally supports a plurality of labeling units (13), wherein each labeling unit (13) comprises a rotating plate (2), comprising a lower retaining element (3) and an upper retaining element (4) for the container (C);
2) a device (15) for applying a support element (1, 101, 201) to a container (C);
3) a system for feeding a strip (9) of support material from a reel (10) to the application device (15) ;
4) a device for cutting the single support elements (1, 101, 201) from the strip (9);
5) a system for feeding a film (18) from a reel (19) to the application device (15), said feeding system being configured to take said film (18) to a feeding point of said support elements (1, 101, 201);
6) optionally, a device for applying an adhesive layer to the surface of the film (18).

11. A method according to any one of the claims from 1 to 7, wherein said machine (200) comprises:
1) a carousel (12), which rotationally supports a plurality of labeling units (13), wherein each labeling unit (13) comprises a rotating plate (2), comprising a lower retaining element (3) and an upper retaining element (4) for the container (C);
2) a device (15) for applying a support element (1, 101, 201) to a container (C);
3) a dispenser (16) of support elements (1, 101, 201) which are die-cut and piled in a pack;
4) a system for feeding a film (18) from a reel (19) to the application device (15), said feeding system being configured to take said film (18) to a feeding point of said support elements (1, 101, 201);
6) optionally, a device for applying an adhesive layer to the surface of the film (18).

12. A method according to any one of the claims from 7 to 11, wherein said machine (100, 200) comprises an in-line device (21) for printing said images or writings (8) on said strip (9) of support material or on said support element (1, 101, 201).

13. A method according to any one of the claims from 6 to 12, wherein said machine (100, 200) comprises an in-line device (22, 23) for providing said reinforcing elements (7, 7') on said support elements (1, 101, 201).

14. A container (C) having a convex bottom (F) and a side surface (S), comprising a self-bearing support element (1, 101, 201), wherein:
- said support element (1, 101, 201) is in the form of a strip made of a support material, said strip and said support material being as defined in the claims from 3 to 5;
- optionally, said support element (1, 101, 201) comprises reinforcing elements (7, 7');
- said support element (1, 101, 201) is adhered to at least one portion of said side surface (S);
- said support element (1, 101, 201), when adhered to said side surface (S) of the container (C), extends downwards at least to the level of an end of the bottom (F) of the container (C);
- optionally, said support element (1, 101, 201) comprises images or writings (8) so as to act as a label for the container (C).
